(19) **Europäisches Patentamt European Patent Office Office européen des brevets**

(11) **EP 4 576 263 A1**

(12) **EUROPEAN PATENT APPLICATION**
published in accordance with Art. 153(4) EPC

(43) Date of publication:
**25.06.2025 Bulletin 2025/26**

(21) Application number: **22960222.2**

(22) Date of filing: **30.09.2022**

(51) International Patent Classification (IPC):
**H01M 4/587** (2010.01)    **H01M 10/0525** (2010.01)

(52) Cooperative Patent Classification (CPC):
**H01M 4/587; H01M 10/0525;** Y02E 60/10

(86) International application number:
**PCT/CN2022/123056**

(87) International publication number:
**WO 2024/065594 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventor: **LI, Liang Ningde, Fujian 352100 (CN)**

(74) Representative: **Icosa 83 avenue Denfert-Rochereau 75014 Paris (FR)**

(54) **NEGATIVE ELECTRODE MATERIAL AND ELECTROCHEMICAL DEVICE**

(57)    This application provides a negative electrode material. The negative electrode material includes a silicon-carbon material. The silicon-carbon material contains element silicon, element carbon, element oxygen, and a metal element. Based on a mass of the silicon-carbon material, a mass percentage of element silicon is a, where $10\% \leq a \leq 90\%$; and a mass percentage of the metal element is x, where $0.01\% < x < 0.5\%$. The metal element includes at least one of barium, calcium, magnesium, iron, aluminum, or manganese. This application further provides an electrochemical apparatus.

## Description

### TECHNICAL FIELD

This application relates to the field of lithium-ion batteries, and in particular, to a negative electrode material and an electrochemical apparatus.

### BACKGROUND

Silicon, as a negative electrode material of lithium-ion batteries, has a theoretical gram capacity up to 4200 mAh/g. Therefore, it is considered as a next-generation lithium-ion negative electrode material that is most likely to replace traditional graphite negative electrode materials and increases the energy density of lithium-ion batteries. However, during charge and discharge, as lithium ions intercalate into lattice of silicon, silicon-silicon bonds gradually break and lithium-silicon bonds are gradually formed. Silicon particles undergo significant volume expansion (300-400%) during lithium intercalation. Such significant volume expansion of the silicon particles is inevitable during lithium intercalation, and a volume change of the silicon particles during cycling causes fragmentation of the silicon particles, resulting in electrode plate pulverization, formation of unstable SEI films, and rapid capacity decay. In view of the numerous disadvantages of silicon as a negative electrode material, a great amount of research in the art has focused on improving the performance of silicon, with practical application issues neglected.

In recent years, in industrialization and scale-up production of silicon-carbon materials, it has been found that a silicon-carbon material slurry produces a significant amount of hydrogen, affecting subsequent coating and cold pressing processes. This makes the actual capacity and initial coulombic efficiency designed for a full battery fail to correspond to the capacity and initial coulombic efficiency after coating, resulting in an unstable capacity of the full battery. Currently, coating methods can be used to stabilize the processing of silicon-carbon materials in water-based slurries. In a coating method, physical coating is mainly used. Such coating method cannot form tight contact with the surface of the silicon-carbon material. During slurry stirring, a coating layer is easy to fall off and a coating effect cannot be achieved, making it difficult to effectively solve the problem of gas production in the slurry.

### SUMMARY

To resolve the foregoing problem, this application is intended to provide a negative electrode material and an electrochemical apparatus using such negative electrode material.

According to a first aspect, this application provides a negative electrode material. The negative electrode material includes a silicon-carbon material. The silicon-carbon material contains element silicon, element carbon, element oxygen, and a metal element. Based on a mass of the silicon-carbon material, a mass percentage of element silicon is a, where $10\% \leq a \leq 90\%$; and a mass percentage of the metal element is x, where $0.01\% < x < 0.5\%$. The metal element includes at least one of barium, calcium, magnesium, iron, aluminum, or manganese. When the silicon-carbon material contains a metal element, gas production of the silicon-carbon material can be reduced, and processing performance of slurry can be improved, allowing an electrochemical apparatus to achieve better cycling performance and swelling resistance.

With the technical solution of this application, a passivated silicon-carbon material precursor reacts with a metal hydroxide, so that the silicon-carbon material is externally coated with a uniform insoluble salt layer in situ. This coating layer is insoluble in water, so during processing of a water-based slurry of the silicon-carbon material, contact between nano silicon in the silicon-carbon material and water is effectively avoided, thereby avoiding the problem of production of hydrogen in slurry processing, and further preventing the gas production from affecting subsequence processes such as coating and cold pressing.

According to some embodiments of this application, the silicon-carbon material is immersed in water for 48 h in a closed space with an air atmosphere, and based on a total volume of gas in the closed space, a volume percentage of hydrogen is measured as y, where $y < 5\%$. In this case, gas production of the silicon-carbon material is reduced, and the reduction of gas production can reduce the adverse effect on the cycling performance and swelling rate of a battery.

According to some embodiments of this application, the silicon-carbon material has a coating layer on the surface, and the coating layer has a thickness of z, where $50\ nm < z < 1000\ nm$. Preferably, the thickness is obtained through a CROSS-SECTION test, where the thickness of the coating layer is measured from a cross section obtained after the silicon-carbon material is cut. Through a chemical reaction, the surface of the silicon-carbon material is coated with a compact and uniform coating layer having a thickness within this range, so that the coating layer is in a tight contact with the internal silicon-carbon material and does not fall off during slurry stirring, thereby effectively avoiding the problem of gas production in slurry processing. In the chemical reaction, nano silicon exposed from the surface participates in the reaction, and the nano silicon on the surface is consumed in the reaction. This slightly reduces the capacity of the silicon-carbon material, but avoids side reactions between the silicon on the surface and the electrolyte. In addition, the reaction of the nano silicon on the surface avoids the problem of lack of buffering space for swelling of nano silicon, so the cycling performance and swelling resistance of the electrochemical apparatus can be improved. However, an excessively thick coating layer reduces the capacity of the silicon-carbon material.

According to some embodiments of this application, the coating layer is a silicate layer.

According to some embodiments of this application, the silicon-carbon material is powdery. Specifically, an average particle size of the silicon-carbon material according to this application is 5 $\mu$m to 15 $\mu$m. When the average particle size is within this range, there are fewer side reactions when the silicon-carbon material comes into contact with the electrolyte, allowing for better intercalation of active ions and achieving a high capacity.

According to some embodiments of this application, the mass percentage of the metal element and the mass percentage of element silicon satisfy $0.0001 \leq x/a \leq 0.05$. When the foregoing relationship is satisfied, the advantage of high energy density of a silicon negative electrode can be exerted, and both good cycling performance and slurry processing performance of the electrochemical apparatus are achieved.

According to some embodiments of this application, the silicon-carbon material precursor is passivated using oxygen to obtain the silicon-carbon material according to this application. Therefore, the silicon-carbon material according to this application contains element oxygen.

According to some embodiments of this application, based on the mass of the silicon-carbon material, a mass percentage of element oxygen is b, where $1\% < b < 10\%$. When the percentage of oxygen of the silicon-carbon material is within this range, active ions are consumed, so that an inert phase is formed on the surface of the silicon-carbon material, effectively improving the swelling resistance, thereby prolonging the cycle life of the electrochemical apparatus.

According to a second aspect of this application, this application provides a method for preparing negative electrode material, where the method at least includes the following steps:

(i) providing a porous carbon skeleton and depositing silicane gas on the porous carbon skeleton to obtain a carbon-silicon material precursor;

(ii) passivating the carbon-silicon material obtained in step (i) by using oxygen to obtain a passivated carbon-silicon material precursor; and

(iii) putting the passivated carbon-silicon material precursor obtained in step (ii) into an alkaline solution to obtain a silicon-carbon material, where the alkaline solution is an aqueous solution of hydroxide of a metal element, and the metal element includes at least one of barium, calcium, magnesium, iron, aluminum, or manganese.

According to some embodiments of this application, a pore volume of the porous carbon skeleton in step (i) is > 0.3cc/g, where more than 60% of the pore volume is the pore volume of micropores and mesopores.

According to some embodiments of this application, in step (i), the porous carbon skeleton is put into a deposition reactor (for example, a fluidized bed reactor); silicon-containing gases are introduced at 400°C to 900°C, where the silicon-containing gases include 1 vol% to 100 vol% of silicane gas, and the remaining is inert gas; and silicane deposition is performed under this condition for 1 h to 12 h.

According to some embodiments of this application, the inert gas may be one or nitrogen, argon, and helium, or a combination thereof.

According to some embodiments of this application, in step (ii), after the deposition reaction is completed, the temperature is reduced to 30°C to 200°C, and oxygen-containing gases are introduced, where the oxygen-containing gases include 1 vol% to 30 vol% of oxygen, the remaining is inert gas, the gases are introduced for 1 h to 12 h, and a passivation reaction takes place.

According to some embodiments of this application, in step (iii), the passivated carbon-silicon material is dispersed in an alkaline solution with a concentration of 0.001M to 0.2M, stirred for dispersion at 20°C to 80°C for 1 h to 12 h, and then subjected to extraction filtration using deionized water until the pH value of a filtrate is 6 to 8; and a filter cake is baked for 12 h in an oven at 70°C to obtain a negative electrode material.

According to some embodiments of this application, the silicon-carbon material can be used to prepare a water-based negative electrode slurry. After fully stirred and left standing for 48 h, the water-based negative electrode slurry can be applied onto a current collector without forming abnormal morphology caused by gas production, thereby achieving excellent processing performance.

According to a third aspect, this application provides an electrochemical apparatus. The electrochemical apparatus includes a positive electrode, a negative electrode, and an electrolyte, where the negative electrode includes the negative electrode material according to this application; the electrolyte contains lithium hexafluorophosphate; and based on a mass of the electrolyte, a mass percentage of lithium hexafluorophosphate is c, where $5\% \leq c \leq 33\%$, which can ensure good cycling performance and rate performance of the electrochemical apparatus.

According to some embodiments of this application, a mass percentage x of the metal element in the silicon-carbon material and the mass percentage c of lithium hexafluorophosphate in the electrochemical apparatus satisfy $0003 \leq x/c \leq 0.1$. When the percentage of the metal element is small, a lot of silicon of the silicon-carbon material is directly exposed in the electrolyte and reacts with lithium hexafluorophosphate in the electrolyte, resulting in loss of active silicon. In addition, consumption of lithium hexafluorophosphate may weaken its function in the electrolyte, affecting the cycling performance and swelling resistance of the battery. When the mass percentage of the metal element in the silicon-carbon material and the percentage of lithium hexafluorophosphate satisfy the foregoing relationship, the metal element can reduce side reactions between the silicon-carbon material and lithium hexafluorophosphate, improving the cycling performance and swelling resistance of the battery.

According to some embodiments of this application, the electrochemical apparatus is a lithium-ion battery, and the lithium-ion battery has a cycling retention rate greater than 80% after 800 cycles at a charge rate of 3C at 25°C, and/or has a swelling rate less than 10% after fully charged. The electrochemical apparatus has excellent cycling performance and swelling resistance.

The negative electrode material provided in this application can effectively improve the processing performance of the negative electrode slurry and reduce gas production. An electrochemical apparatus using such negative electrode material has significantly improved cycling performance, rate performance, and swelling resistance.

## DESCRIPTION OF EMBODIMENTS

To make the objectives, technical solutions, and advantages of this application clearer, the following clearly and completely describes the technical solutions in this application with reference to some embodiments. Apparently, the described embodiments are some but not all embodiments of this application. Relevant embodiments described herein are illustrative and used to provide a basic understanding of this application. Some embodiments of this application should not be construed as limitations on this application. All other embodiments obtained by persons skilled in the art based on the technical solutions provided by this application and the given embodiments without creative efforts shall fall within the protection scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

A list of items connected by the terms "at least one of", "at least one piece of", "at least one type of", or the like may mean any combination of the listed items. For example, if items A and B are listed, the phrase "at least one of A and B" means only A, only B, or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain a single composition or a plurality of compositions. The item B may contain a single composition or a plurality of compositions. The item C may contain a single composition or a plurality of compositions.

I. Negative electrode

The negative electrode includes a current collector and a negative electrode active substance layer located on a surface of the current collector. The negative electrode active substance layer includes the negative electrode material according to the first aspect. In some embodiments, the current collector includes copper foil, nickel foil, stainless steel foil, titanium foil, foamed nickel, foamed copper, polymer base coated with conductive metal, or any combination thereof.

In some embodiments, the negative electrode active substance layer further includes a binder. The binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like.

In some embodiments, the negative electrode active substance layer further includes a conductive agent. The conductive agent includes but is not limited to: a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The negative electrode in this application may be prepared by using a commonly known method in the art.

Typically, a negative electrode active material, an optional conductive agent (for example, a carbon material such as carbon black and metal particles), a binder (for example, SBR), another optional additive (for example, a PTC thermistor material), and other materials are mixed and dispersed in a solvent (for example, deionized water), and the resulting mixture is stirred to uniformity and uniformly applied onto a negative electrode current collector, followed by drying, to obtain a negative electrode including a negative electrode membrane. A material such as a metal foil or a porous metal plate may be used as the negative electrode current collector.

II. Positive electrode

Materials, components, and manufacturing methods of the positive electrode which can be used in some embodiments of this application include any technology disclosed in the prior art.

In some embodiments, the positive electrode includes a current collector and a positive electrode active material layer located on the current collector.

In some embodiments, the positive electrode active material includes a positive electrode material capable of absorbing and releasing lithium or sodium. The positive electrode material releasing lithium includes but is not limited to lithium cobaltate, lithium nickel cobalt manganate, lithium nickel cobalt aluminate, lithium manganate, lithium manganese iron phosphate, lithium vanadium phosphate, lithium vanadyl phosphate, lithium iron phosphate, lithium titanate, and alithium-rich manganese-based materials. The positive electrode material releasing lithium may be at least one of a layered oxide of a transition metal, a sodium polyanion compound, Prussian blue, Prussian white, or the like.

In some embodiments, the positive electrode active material layer further includes a binder, and optionally includes a conductive material. The binder enhances bonding between particles of the positive electrode active material and bonding between the positive electrode active material and the current collector.

In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like.

In some embodiments, the conductive material includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments, the current collector may include but is not limited to aluminum.

The positive electrode can be prepared using a preparation method commonly known in the art. For example, the positive electrode can be obtained using the following method: mixing the active material, the conductive material, and the binder in a solvent to prepare an active material composition, and applying the active material composition onto the current collector. In some embodiments, the solvent may include but is not limited to N-methylpyrrolidone. The electrochemical apparatus in this application has higher energy density and better cycling performance, capable of meeting application requirements.

III. Separator

According to some embodiments of this application, the separator is not limited to any particular material or shape in this application, and may be based on any technology disclosed in the prior art. In some embodiments, the separator includes a polymer, an inorganic substance, or the like formed by a material stable to the electrolyte of this application.

For example, the separator may include a substrate layer and a surface treatment layer. The substrate layer is a non-woven fabric, film, or composite film having a porous structure, and the substrate layer is made of a material selected from at least one of polyethylene, polypropylene, polyethylene terephthalate, or polyimide. Specifically, a polypropylene porous film, a polyethylene porous film, a polypropylene non-woven fabric, a polyethylene non-woven fabric, a ceglard composite film, or a polypropylene-polyethylene-polypropylene porous composite film may be selected.

The surface treatment layer is provided on at least one surface of the substrate layer, and the surface treatment layer may be a polymer layer or an inorganic substance layer, or may be a layer formed by mixing a polymer and an inorganic substance.

The inorganic substance layer includes inorganic particles and a binder. The inorganic particles are selected from at least one of aluminum oxide, silicon oxide, magnesium oxide, titanium oxide, hafnium oxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylic salt, polyvinylpyrrolidone, polyvinyl ether, polymethyl methacrylate, polytetrafluoroethylene, or polyhexafluoropropylene.

The polymer layer includes a polymer, and a material of the polymer is selected from at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

IV. Electrolyte

According to some embodiments of this application, the electrolyte of this application may include components similar to those in the technologies disclosed in the prior art. The electrolyte according to this application preferably contains lithium hexafluorophosphate, and based on a mass of the electrolyte, a mass percentage of lithium hexafluorophosphate is c, where $5\% \leq c \leq 33\%$. In some embodiments, an electrolyte of a lithium battery includes at least one of fluoroether, fluoroethylene carbonate, or ether nitrile. In some embodiments, the electrolyte further includes a lithium salt. The lithium salt includes lithium bis(fluorosulfonyl)imide and lithium hexafluorophosphate. A concentration of the lithium salt is 1 mol/L to 2 mol/L, and a molar ratio of lithium bis(fluorosulfonyl)imide to lithium hexafluorophosphate is 0.05 to 4.

In some embodiments, an electrolyte of a sodium battery includes an organic solvent, a sodium salt, and the like, where the organic solvent may be at least one of EC, PC, DMC, DEC, EMC, EA, FEC, VC, or the like, and the sodium salt may be at least one of $NaClO_4$, $NaPF_6$, $NaBF_4$, NaFSI, NaTFSI, or the like.

In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

V. Electrochemical apparatus

This application provides an electrochemical apparatus. The electrochemical apparatus includes a negative electrode, a positive electrode, an electrolyte, and a separator.

In some embodiments, the electrochemical apparatus of this application includes but is not limited to all types of primary batteries, secondary batteries, fuel batteries, solar batteries, or capacitors.

In some embodiments, the electrochemical apparatus is a sodium-ion battery.

In some embodiments, the electrochemical apparatus is a lithium secondary battery.

In some embodiments, the lithium secondary battery includes but is not limited to a lithium metal secondary battery, a lithium-ion secondary battery, a lithium polymer secondary battery, or a lithium-ion polymer secondary battery.

VI. Test method

1. Silicate layer thickness test (CROSS-SECTION test)

A cross section polisher is used to ionize an inert gas into inert ions by using an ion source, and after acceleration and focusing, high-speed inert ions remove atoms or molecules from the surface of a sample by collision so as to implement ion polishing. After CP cutting, the sample is put onto a SEM special sample table for a SEM test. The model of the instrument is IB-09010CP, an ion acceleration voltage is 2 kV to 6 kV, and the gas used is argon. In this example, after the silicon-carbon material is cut through a CROSS-SECTION test, the thickness of an etching/silicate layer at the cross section can be tested.

2. Particle size test

0.02 g of silicon-carbon material sample is added into a 50 mL clean beaker, and 20 mL deionized water is added into the beaker, with a few drops of 1% surfactant added to make powder fully dispersed in the water. Then, a 120 W ultrasonic cleaning machine is used for performing ultrasonic treatment for 5 min, and MasterSizer 2000 is used to test particle size distribution so as to calculate an average particle size of the silicon-carbon material.

3. Gas production test

The silicon-carbon material sample needs to be stored hermetically. In the test, after the sample in an unopened small bag is mixed to uniformity, 0.5 g of the silicon-carbon material powder and 4 g of water are mixed in a 20-mL penicillin bottle (at that point, the gas in the bottle is air). It is ensured that the powder is all in a water phase without floating, and the bottle is sealed and left standing for 48 h ($\pm$0.5 h). Before the test, the bottle body is shaken anticlockwise for 30s.

A 2.5-mL gas sampling syringe is used to suck 1 mL supernatant gas from the penicillin bottle for a GC-TCD test using a test device Aglient 7890A. The temperature at an injection port is 150°C; flow is divided using a constant-flow mode; helium is used as a carrier gas; a flow velocity of a chromatographic column is 8 mL/min; a flow division ratio is 2:1; the temperature of a detector is 200°C; a reference flow is 30 mL/min; and a tail gas flow is 4 mL/min. The test principle is as follows: The gas chromatographic method is used. When the sample operates in the chromatographic column, components are repeatedly allocated multiple times between two phases. Since a fixed phase has different adsorption capacities on the components, the components are separated from each other after passing through a certain length of the column, leave the chromatographic column according to a flow-out sequence, and enter the detector for detection. Then a chromatographic peak flow-out curve of each component is drawn on a recorder. A mass fraction of each component can be determined by testing a peak area and using an external standard method for quantification.

4. Metal element percentage test

0.1 g of the silicon-carbon material sample is weighed and put into a beaker made of a PTFE material; 10 mL $HNO_3$ and 2 mL HF are added, and the beaker is put onto a heating plate at 220°C and heated to dissolve the resulting mixture until the mixture is nearly evaporated but not fully evaporated. Then, 10 mL nitric acid is added to make sure that the sample is fully dissolved but not fully evaporated. Subsequently, the dissolved sample is cooled to room temperature and filtered three times using a single layer of filter paper. The solution is adjusted to 100 mL, and then the liquid sample is taken to a materialization system through a carrier gas, and enters the plasma in a form of aerosol to be fully evaporated, dissociated, atomized, ionized, and excited, so as to emit characteristic spectral lines of atoms. Qualitative analysis is performed based on wavelengths of the spectral lines, and a percentage of element alkaline is quantitatively analyzed based on the intensity of the spectral lines being in direct proportion to the concentration.

5. Element silicon percentage test

0.1000 g of the silicon-carbon material is put into a nickel crucible, 1.5 g of KOH is added, and the nickel crucible is closed with a crucible cover. The muffle furnace is slowly heated to 400°C according to the following heating process: the furnace is heated from room temperature to 300°C within 2 h, then heated from 300°C to 400°C within 2 h, then a cooling and decomposition process is started, and the crucible is taken out after the process ends. After the roasted crucible is cooled to about 100°C, the material is taken out and put into a beaker, 30 mL boiled water is slowly added, and the material is leached for 1 h. The crucible is clamped using tweezers and washed, with the volume controlled to be 50 mL. The material is filtered and put into a 400-mL beaker. After filtration is completed, 20 mL concentrated nitric acid is added at a time to neutralize the solution to make it acidic. After the test solution is cooled to room temperature, solid potassium chloride is added with constant stirring until the solution is saturated. Then 2 g of potassium chloride is added in excess, and 10 mL of potassium fluoride solution is added. White precipitate appears after potassium fluoride is added, followed by aging for 15 min and filtering with an intermediate-speed quantitative filter paper. The beaker and the precipitate are washed for three time, with 8 mL potassium chloride solution used for washing each time. The filter paper is taken down and put back to the original beaker. 20 mL of potassium chloride ethanol solution and 10 drops of phenolphthalein are added, residual acid is neutralized using a sodium hydroxide standard solution, and the filter paper is carefully stirred and used to wipe the wall of the beaker until the solution turns light red. The paper pulp is smashed as much as possible using a glass rod. After thorough reaction, 200 mL of neutralized boiled water was added into the beaker. After boiling, 10 drops of phenolphthalein are added, the mixture solution is neutralized using a sodium hydroxide standard solution until the mixture solution is in a reddish color. The mixture solution is titrated using the sodium hydroxide standard solution until the mixture solution is in light red as the end point, and the volume consumed by titration is recorded. The percentage of silicon is calculated according to the following formula:

$$\omega_{Si}=(V-V_0)\times c\times 0.0072/m\times 100\%,$$

where c represents a concentration of the sodium hydroxide standard solution, measured in mol/L; V represents a volume of the titrated sodium hydroxide standard solution consumed; $V_0$ represents a volume of a blank sodium hydroxide standard solution; 0.0072 is 1/4 of a molar mass of Si; and m represents a mass of a test sample.

6. Element O percentage test

Element oxygen percentage test: An appropriate amount of sample is weighed, accurate to 0.001 mg. A Shanghai Weipu organic element analyzer is used for test, with the model being American Platinum Elmer Series II 2400. The test method is JY/T 0580-2020. More than two parallel determinations are performed continuously according to a sample determination process until analysis error requirements are obtained based on results of two adjacent determinations. After determination of the sample, the standard substance needs to be determined again. If the result deviates from an instrument operation instruction range, the sample needs to be determined again. A mass percentage of element oxygen in the sample is calculated according to the following formula: $a=\dfrac{e}{m}k$ , where e represents an absolute mass of element hydrogen in the sample obtained according to a calibration curve, measured in mg; m represents a mass of the sample weighed, measured in mg; and k represents a calibration factor on that day of element oxygen.

7. Full battery test

7.1. Cycling performance test

At a test temperature of 25°C/45°C, the battery is charged to 4.4 V at a constant current of 0.7C, constant-voltage charged to 0.025C, left standing for 5 minutes, and then discharged to 3.0 V at 0.5C. A capacity obtained in this cycle is the initial capacity. Then, a 0.7C charge and 0.5C discharge cycling test is performed. A ratio of the capacity of each cycle to the initial capacity is calculated to obtain a capacity decay curve. The number of cycles to a capacity retention rate of 90% at 25°C is recorded as cycling performance of the battery under room temperature; and the number of cycles to a capacity retention rate of 80% at 45°C is recorded as cycling performance of the battery under high temperature. The numbers of cycles in the above two cases are compared to compare cycling performance of the material.

7.2. Discharge rate test

At 25°C, the battery is discharged to 3.0 V at 0.2C, left standing for 5 min, charged to 4.45 V at 0.5C, constant-voltage charged to 0.05C, and left standing for 5 min. Then, the discharge rate is adjusted to 0.2C, 0.5C, 1C, 1.5C, and 2.0C respectively and discharge tests are performed under these rates to obtain respective discharge capacities. The capacity obtained under each rate is compared with the capacity obtained under 0.2C, and ratios under 2C and 0.2C are compared for comparing rate performance.

7.3. Swelling rate test for fully-charged battery

A spiral micrometer is used to measure thickness of a half-charged (50% state of charge (SOC)) fresh battery. Then, after 400 cycles, the battery is fully charged (100% SOC), the thickness of the battery at that point is measured with the spiral micrometer and compared with the initial thickness of the half-charged (50%SOC) fresh battery to obtain a swelling rate of the fully-charged (100% SOC) battery at that point.

**Example 1**

Silicon-carbon material

The silicon-carbon material of Example 1 was prepared according to the following steps.
100 g of a porous carbon skeleton (Clary company-YP-50F 6-micrometer model) was added, where the porous carbon skeleton had a pore volume of 0.8 cc/g, where a pore volume of micropores and mesopores was 87% of the total pore volume.

The porous carbon skeleton was put into a deposition reactor, for example, a fluidized bed reactor. Under a temperature of 700°C, silicon-containing gases were introduced into the reactor for a silicane deposition reaction for 8 h. Based on a volume of the silicon-containing gases, the silicon-containing gases contained 25 vol% of silicane gas, and the remaining was nitrogen. In this way, a silicon-carbon material was obtained.

After the deposition reaction was completed, the temperature was reduced to 45°C or below, and subsequently, oxygen-containing gases were introduced into the reactor for a passivation reaction, where based on a volume of the oxygen-containing gases, the oxygen-containing gases contained 25 vol% of oxygen, and the remaining was nitrogen. The oxygen-containing gases were introduced for 8 h. In this way, a passivated silicon-carbon material was obtained.

20 g of the passivated silicon-carbon material prepared was dispersed in 200 mL barium hydroxide solution having a concentration of 0.005 M, and stirred for dispersion for 4 h at 25°C to obtain a dispersion liquid.

After the foregoing reaction was completed, the dispersion liquid was subjected to extraction filtration using deionized water until the pH value of a filtrate was 7, and a filter cake obtained was baked in an oven at 70°C for 12 h to obtain a silicon-carbon material.

Lithium-ion button battery

A lithium-ion button battery of Example 1 was prepared according to the following steps.

The silicon-carbon material of Example 1, conductive carbon black, and a polymer were added into deionized water according to a mass ratio of 80:10:10, and the resulting mixture was stirred to obtain a slurry. The slurry was applied onto a copper foil to form a negative electrode active coating having a thickness of 100 $\mu$m, and the copper foil was dried in vacuum at 85°C for 12 h, and cut into a circular disc having a diameter of 1 cm in a dry environment to obtain a negative electrode. Metal lithium sheets were used as a pair of electrodes, and a ceglard composite film was used as a separator. After an electrolyte was injected, a lithium-ion button battery was assembled.

Lithium-ion full battery

A lithium-ion full battery of Example 1 was prepared according to the following steps.

Preparation of positive electrode: $LiCoO_2$, conductive carbon black, and polyvinylidene fluoride (PVDF) were added into N-methylpyrrolidone according to a mass ratio of 95%:2.5%:2.5%, and the resulting mixture were well mixed to obtain a positive electrode slurry. The positive electrode slurry obtained was evenly applied onto a positive electrode current collector aluminum foil, followed by drying and cold pressing, to obtain a positive electrode.

Preparation of negative electrode: Graphite, the silicon-carbon material of Example 1, conductive carbon black, Super P®, and a binder polyacrylic acid (PAA) were mixed according to a weight ratio of 70%:15%:5%:10%, and an appropriate amount of water was added to achieve a solid content of about 55wt% to 70wt%. The viscosity of the slurry was adjusted to about 4000 Pa·s to 6000 Pa·s, to obtain a negative electrode slurry. The negative electrode slurry was applied onto a negative electrode current collector copper foil, followed by drying and cold pressing, to obtain the negative electrode.

Preparation of electrolyte: In a dry argon environment, propylene carbonate (PC), ethylene carbonate (EC), and diethyl carbonate (DEC) were mixed (at a weight ratio of 1:1:1) to form a solvent. $LiPF_6$ was added into the solvent, and the resulting mixture was fully mixed, where $LiPF_6$ had a concentration of 1.15 mol/L. Subsequently, about 12.5wt% of fluoroethylene carbonate (FEC) was added, and the resulting mixture was fully mixed to obtain an electrolyte.

Preparation of separator: A polyethylene (PE) porous polymeric film having a porosity of 35% was used as a separator.

Assembly: The positive electrode plate, the separator, and the negative electrode plate were stacked in order, so that the separator was placed between the positive and negative electrodes for separation. The stack was wound to obtain a jelly roll. The jelly roll was placed in a housing, the electrolyte was injected into the housing, and the housing was packaged, followed by processes such as formation, degassing, and trimming, to obtain the lithium-ion full battery of Example 1.

Examples 2 to 23

Examples 2 to 23 were implemented according to the steps of Example 1. The preparation parameters are shown in Table 1.

Comparative Examples 1 to 8

Comparative Examples 1 to 8 were implemented according to the steps of Example 1. The preparation parameters are shown in Table 1.

**Table 1**

| Example | Passivation reaction temperature (°C) | Passivation reaction time (h) | Volume percentage of oxygen | Pore volume of precursor (g/cc) | Pore volume percentage of micropores and mesopores | Volume percentage of silicane | Silicane introduction time (h) | Alkaline solution | Concentration of alkaline solution (mol/L) | Temperature of alkaline solution (°C) | Dispersing and stirring time (h) |
|---|---|---|---|---|---|---|---|---|---|---|---|
| Example 1 | 45 | 8 | 25% | 0.8 | 87% | 25% | 8.0 | Barium hydroxide | 0.005 | 25.0 | 4.0 |
| Example 2 | 45 | 8 | 25% | 0.8 | 87% | 25% | 8.0 | Barium hydroxide | 0.010 | 25.0 | 4.0 |
| Example 3 | 45 | 8 | 25% | 0.8 | 87% | 25% | 8.0 | Barium hydroxide | 0.010 | 45.0 | 8.0 |
| Example 4 | 45 | 8 | 25% | 0.8 | 87% | 25% | 8.0 | Barium hydroxide | 0.100 | 45.0 | 8.0 |
| Example 5 | 45 | 8 | 25% | 0.8 | 87% | 25% | 8.0 | Calcium hydroxide | 0.001 | 25.0 | 1.0 |
| Example 6 | 45 | 8 | 25% | 0.8 | 87% | 25% | 8.0 | Barium hydroxide and calcium hydroxide | 0.001 | 25.0 | 1.0 |
| Example 7 | 45 | 8 | 25% | 0.75 | 75% | 15% | 8.0 | Barium hydroxide | 0.010 | 25.0 | 8.0 |
| Example 8 | 45 | 8 | 25% | 0.8 | 90% | 35% | 12.0 | Barium hydroxide | 0.010 | 25.0 | 1.0 |
| Example 9 | 45 | 10 | 30% | 0.9 | 95% | 45% | 12.0 | Barium hydroxide | 0.005 | 25.0 | 0.5 |
| Example 10 | 45 | 8 | 25% | 0.8 | 80% | 5% | 4.0 | Barium hydroxide | 0.020 | 45.0 | 8.0 |
| Example 11 | 100 | 10 | 20% | 0.8 | 80% | 90% | 12.0 | Barium hydroxide | 0.001 | 25.0 | 0.2 |

| Example | Passivation reaction temperature (°C) | Passivation reaction time (h) | Volume percentage of oxygen | Pore volume of precursor (g/cc) | Pore volume percentage of micropores and mesopores | Volume percentage of silicane | Silicane introduction time (h) | Alkaline solution | Concentration of alkaline solution (mol/L) | Temperature of alkaline solution (°C) | Dispersing and stirring time (h) |
|---|---|---|---|---|---|---|---|---|---|---|---|
| Example 12 | 45 | 8 | 25% | 0.8 | 87% | 25% | 8.0 | Barium hydroxide | 0.010 | 25.0 | 0.5 |
| Example 13 | 45 | 8 | 25% | 0.8 | 87% | 25% | 8.0 | Barium hydroxide | 0.015 | 25.0 | 2.0 |
| Example 14 | 45 | 8 | 25% | 0.8 | 87% | 25% | 8.0 | Barium hydroxide | 0.020 | 25.0 | 8.0 |
| Example 15 | 80 | 8 | 27% | 0.8 | 87% | 25% | 8.0 | Barium hydroxide | 0.010 | 25.0 | 4.0 |
| Example 16 | 45 | 10 | 28% | 0.8 | 87% | 25% | 8.0 | Barium hydroxide | 0.010 | 25.0 | 4.0 |
| Example 17 | 35 | 8 | 20% | 0.8 | 87% | 25% | 8.0 | Barium hydroxide | 0.010 | 25.0 | 4.0 |
| Example 18 | 35 | 6 | 18% | 0.8 | 87% | 25% | 8.0 | Barium hydroxide | 0.010 | 25.0 | 4.0 |
| Example 19 | 35 | 4 | 10% | 0.8 | 87% | 25% | 8.0 | Barium hydroxide | 0.010 | 25.0 | 4.0 |
| Example 20 | 45 | 8 | 25% | 0.8 | 87% | 25% | 8.0 | Barium hydroxide | 0.010 | 25.0 | 4.0 |
| Example 21 | 45 | 8 | 25% | 0.8 | 87% | 25% | 8.0 | Barium hydroxide | 0.010 | 25.0 | 4.0 |
| Example 22 | 45 | 8 | 25% | 0.8 | 87% | 25% | 8.0 | Barium hydroxide | 0.010 | 25.0 | 4.0 |
| Example 23 | 45 | 8 | 25% | 0.8 | 87% | 25% | 8.0 | Barium hydroxide | 0.010 | 25.0 | 2.0 |
| Example 24 | 45 | 8 | 25% | 0.8 | 87% | 25% | 8.0 | Barium hydroxide | 0.020 | 25.0 | 5.0 |

EP 4 576 263 A1

(continued)

| Example | Passivation reaction temperature (°C) | Passivation reaction time (h) | Volume percentage of oxygen | Pore volume of precursor (g/cc) | Pore volume percentage of micropores and mesopores | Volume percentage of silicane | Silicane introduction time (h) | Alkaline solution | Concentration of alkaline solution (mol/L) | Temperature of alkaline solution (°C) | Dispersing and stirring time (h) |
|---|---|---|---|---|---|---|---|---|---|---|---|
| Example 25 | 45 | 8 | 25% | 0.8 | 87% | 25% | 8.0 | Barium hydroxide | 0.040 | 45.0 | 7.0 |
| Comparative Example 1 | 45 | 8 | 25% | 0.8 | 87% | 25% | 8.0 | Barium hydroxide | 0.001 | 45.0 | 2.0 |
| Comparative Example 2 | 45 | 8 | 25% | 0.8 | 87% | 25% | 8.0 | Barium hydroxide | 0.001 | 25.0 | 1.0 |
| Comparative Example 3 | 45 | 8 | 25% | 0.8 | 87% | 25% | 8.0 | Barium hydroxide | 0.200 | 45.0 | 8.0 |
| Comparative Example 4 | 25 | 4 | 8% | 0.8 | 87% | 25% | 8.0 | Barium hydroxide | 0.010 | 25.0 | 4.0 |
| Comparative Example 5 | 25 | 2 | 5% | 0.8 | 87% | 25% | 8.0 | Barium hydroxide | 0.010 | 25.0 | 4.0 |
| Comparative Example 6 | 100 | 12 | 30% | 0.8 | 87% | 25% | 8.0 | Barium hydroxide | 0.010 | 25.0 | 4.0 |
| Comparative Example 7 | 45 | 8 | 25% | 0.8 | 87% | 25% | 8.0 | Barium hydroxide | 0.150 | 80.0 | 10.0 |
| Comparative Example 8 | 100 | 12 | 30% | 0.8 | 87% | 25% | 8.0 | Barium hydroxide | 0.010 | 25.0 | 4.0 |

Mass percentages x of metal elements (elements barium and calcium), mass percentage a of element silicon, thickness z of the silicate layer, and mass percentage b of element oxygen in each of the silicon-carbon materials obtained in Examples 1 to 14 and Comparative Examples 1 to 3 were determined.

The silicon-carbon material powder obtained in Examples 1 to 14 and Comparative Examples 1 to 3 was subjected to gas production test for determining the volume percentage y of hydrogen produced after the silicon-carbon material was immersed in water for 48 h.

After the negative electrode slurries obtained in Examples 1 to 14 and Comparative Examples 1 to 3 were left standing for 48 h, whether the processing performance of the slurries was abnormal was determined, and the processing performance was divided into the following three types according to the shapes and performance observed.

Good: No obvious abnormality observed.

General: Gas is produced in slurry, and the coating can be disconnected.

Poor: Gas is produced in slurry, and the coating cannot be disconnected.

The lithium-ion button batteries obtained in Examples 1 to 14 and Comparative Examples 1 to 3 were subjected to battery performance test to obtain the negative electrode gram capacities of the lithium-ion button batteries.

The lithium-ion full batteries obtained in Examples 1 to 14 and Comparative Examples 1 to 3 were subjected to battery performance tests, including cycling performance test, discharge rate test, and battery swelling rate test.

Results of the foregoing tests are summarized in Table 2, Table 3, and Table 4.

**Table 2**

| Example | x | y | z (nm) | Gram capacity (mAh/g) | Cycles to 90% of capacity at 25°C | Swelling rate of fully-charged battery after 500 cycles at 25°C | Cycles to 80% of capacity at 45°C | Swelling rate of fully-charged battery after 500 cycles at 45°C | Processing performance |
|---|---|---|---|---|---|---|---|---|---|
| Example 1 | 0.05% | 4% | 100 | 1914 | 988 | 6.9% | 803 | 8.7% | Good |
| Example 2 | 0.08% | 2% | 400 | 1900.2 | 1030 | 6.6% | 870 | 8.1% | Good |
| Example 3 | 0.30% | 1% | 800 | 1890 | 1067 | 6.4% | 899 | 7.9% | Good |
| Example 4 | 0.45% | 1% | 930.0 | 1885.0 | 1101 | 6.2% | 928 | 7.7% | Good |
| Example 5 | 0.08% | 2% | 390 | 1915.2 | 1015 | 6.6% | 850 | 8.1% | Good |
| Example 6 | 0.08% | 2% | 395 | 1910.2 | 1025 | 6.6% | 859 | 8.1% | Good |
| Comparative Example 1 | 0.005% | 15% | 5.0 | 1918.0 | 412 | 11.9% | 477 | 13.2% | Poor |
| Comparative Example 2 | 0.001% | 30% | 0 | 1919.5 | 322 | 14.1% | 279 | 15.6% | Poor |
| Comparative Example 3 | 0.90% | 0% | 2000 | 1200 | 577 | 6.1% | 498 | 8.5% | Good |

As shown in the test results of Examples 1 to 6 and Comparative Examples 1 to 3 in Table 2, when the percentages of the metal elements (elements barium and calcium) in the silicon-carbon material are increased, gas production is significantly reduced, so that the battery can obtain better cycling performance and performance. By contrast, a smaller amount of silicate layer is used for coating in Comparative Example 1, so gas production is not improved significantly, and the problem of gas production occurs during slurry processing, resulting in poor cycling performance of the battery. The negative electrode active material obtained in Comparative Example 3 has an excessively high thickness of silicate layer. Although the processing performance is good, but a large amount of active silicon is lost, resulting in low gram capacity, which is not conducive to taking advantage of the high energy density of a silicon negative electrode. In addition, the thick silicate layer is not conducive to transport of lithium ions and electrons, affecting the cycling performance of the lithium-ion battery.

Table 3

| Example | x | y | a | x/a | Gram capacity (mAh/g) | Cycles to 90% of capacity at 25°C | Swelling rate of fully-charged battery after 500 cycles at 25°C | Cycles to 80% of capacity at 45°C | Swelling rate of fully-charged battery after 500 cycles at 45°C | Processing performance |
|---|---|---|---|---|---|---|---|---|---|---|
| Example 2 | 0.08% | 2.0% | 44.0% | 0.0018 | 1900.2 | 1030 | 6.6% | 870 | 8.1% | Good |
| Example 7 | 0.08% | 1.0% | 30% | 0.0027 | 1312.0 | 1121 | 6.1% | 932 | 7.0% | Good |
| Example 8 | 0.08% | 5.0% | 52% | 0.0015 | 2178.0 | 945 | 8.3% | 798 | 10.0% | Good |
| Example 9 | 0.08% | 14.0% | 70% | 0.0011 | 2900.0 | 712 | 9.1% | 510 | 11.7% | General |
| Example 10 | 0.08% | 0.10% | 8% | 0.0100 | 385.0 | 1220 | 5.7% | 1101 | 6.0% | Good |
| Example 11 | 0.08% | 45.00% | 95% | 0.0008 | 3425.0 | 531 | 11.6% | 447 | 13.8% | Poor |
| Example 12 | 0.05% | 1.40% | 44% | 0.0011 | 1906.1 | 979 | 7.0% | 755 | 10.1% | Good |
| Example 13 | 0.15% | 1.00% | 44% | 0.0034 | 1885.5 | 1056 | 6.3% | 895 | 7.9% | Good |
| Example 14 | 0.30% | 0.50% | 44% | 0.0068 | 1877.9 | 1098 | 6.1% | 932 | 7.6% | Good |

Table 3 shows test results of Examples 2 and 7 to 14. As can be seen from the comparison between Examples 2 and Examples 7 to 11, in a case that other conditions are the same, an appropriate mass percentage of element silicon in the silicon-carbon material can take full advantage of the high energy density of the silicon negative electrode, and also achieve good cycling performance of the lithium-ion battery and good processing performance of the slurry. As can be seen from the comparison between Example 2 and Examples12 to 14, when the percentages of silicon are the same, a higher percentage of metal element (barium) leads to a thicker silicate layer, alleviating gas production more significantly, and resulting in optimized cycling performance and lower cycling swelling rate of the battery.

**Table 4**

| Example | b | Initial coulombic efficiency | Cycles to 90% of capacity at 25°C | Swelling rate of fully-charged battery after 500 cycles at 25°C | Cycles to 80% of capacity at 45°C | Swelling rate of fully-charged battery after 500 cycles at 45°C |
|---|---|---|---|---|---|---|
| Example 2 | 2% | 91.30% | 1030 | 6.60% | 870 | 8.10% |
| Example 15 | 0.30% | 93.10% | 902 | 9.90% | 703 | 13.90% |
| Example 16 | 1% | 92.40% | 983 | 8.60% | 828 | 10.40% |
| Example 17 | 5% | 90.40% | 1089 | 7.40% | 897 | 7.80% |
| Example 18 | 8% | 88.70% | 1133 | 7.00% | 939 | 7.40% |
| Example 19 | 10% | 86.50% | 1156 | 6.70% | 990 | 7.10% |
| Comparative Example 4 | 12% | 82.10% | 1199 | 6.40% | 1015 | 6.80% |
| Comparative Example 5 | 15% | 80.50% | 1236 | 6.00% | 1100 | 6.50% |

Comparison between Examples 2 and 15 to 19 and Comparative Examples 4 and 5 show that in a case that other conditions are the same, when the percentage of oxygen in the silicon-carbon material is increased, the percentage of oxygen in the surface of nano silicon is increased accordingly. The increased percentage of oxygen results in consumption of active lithium, so that an inert phase is formed, effectively improving the swelling resistance, thereby prolonging the cycle life. As shown in Example 19, when the percentage of oxygen is increased to 10%, the high percentage of oxygen affects the initial coulombic efficiency but improves the swelling resistance and cycling performance. However, when the percentage of oxygen is further increased, for example, when the percentage of oxygen is respectively increased to 12% and 15% in Comparative Examples 4 and 5, the initial coulombic efficiency is reduced. In this case, the excessively low initial coulombic efficiency cannot exert the advantage of high energy density of the silicon-carbon material.

**Table 5**

| Example | x | c | x/c | Cycles to 90% of capacity at 25°C | Cycles to 80% of capacity at 45°C | Discharge rate |
|---|---|---|---|---|---|---|
| Example 2 | 0.08% | 13.00% | 0.0062 | 1030 | 870 | 88.80% |
| Example 20 | 0.08% | 5% | 0.0160 | 1001 | 817 | 86.10% |
| Example 21 | 0.08% | 22% | 0.0036 | 1107 | 930 | 89.30% |
| Example 22 | 0.08% | 33% | 0.0024 | 1159 | 998 | 85.60% |

(continued)

| Example | x | c | x/c | Cycles to 90% of capacity at 25°C | Cycles to 80% of capacity at 45°C | Discharge rate |
|---|---|---|---|---|---|---|
| Example 23 | 0.05% | 13.00% | 0.0038 | 956 | 789 | 88.90% |
| Example 24 | 0.20% | 13.00% | 0.0154 | 1095 | 867 | 88.50% |
| Example 25 | 0.40% | 13.00% | 0.0308 | 1129 | 929 | 88.00% |
| Comparative Example 6 | 0.005% | 13.00% | 0.0003 8 | 544 | 407 | 86.00% |
| Comparative Example 7 | 1.10% | 5.00% | 0.2200 | 400 | 311 | 84.50% |
| Comparative Example 8 | 0.005% | 40.00% | 0.0001 | 422 | 327 | 81.50% |

It can be seen from Table 5 that in a case that other conditions are the same, when the percentage of lithium hexafluorophosphate in the electrolyte is increased, lithium hexafluorophosphate can fully play the role of a lithium salt additive to act as a bridge for lithium ions between the positive and negative electrodes, thereby effectively improving the kinetic performance of lithium ion transport and the rate performance. In addition, abundant lithium salt can ensure excellent cycling performance. As shown in Example 21, when the percentage of lithium hexafluorophosphate is 22wt%, good cycling performance and rate performance can be achieved. However, as shown in Example 22, when the percentage of lithium hexafluorophosphate is increased to 33%, an excessively high viscosity of the electrolyte results in a decrease in kinetic performance of lithium ion transport and also increases the costs of the electrolyte. The excessively low and excessively high percentages of lithium hexafluorophosphate in Comparative Examples 7 and 8 both result in undesired cycling performance. In addition, it can be seen from comparison between Examples 2 and 23 to 25 and Comparative Example 6 that an increase in the mass percentage of the metal element in the silicon-carbon material helps to solve the problem of gas production and improves the cycling performance and swelling resistance. In Comparative Example 6, the percentage of the metal element is only 0.005%, meaning that a large amount of silicon is directly exposed in the electrolyte and reacts with lithium hexafluorophosphate in the electrolyte. As a result, the produced hydrofluoric acid further consumes nano silicon, leading to loss of active silicon. In addition, the consumption of lithium hexafluorophosphate may weaken its function in the electrolyte, affecting the cycling performance and swelling resistance.

**Claims**

1.  A negative electrode material, wherein the negative electrode material comprises a silicon-carbon material, wherein the silicon-carbon material contains element silicon, element carbon, element oxygen, and a metal element; based on a mass of the silicon-carbon material, a mass percentage of element silicon is a, wherein $10\% \leq a \leq 90\%$, and a mass percentage of the metal element is x, wherein $0.01\% < x < 0.5\%$; and the metal element comprises at least one of barium, calcium, magnesium, iron, aluminum, or manganese.

2.  The negative electrode material according to claim 1, wherein the silicon-carbon material is immersed in water for 48 hours in a closed space with air atmosphere, and based on a total volume of gas in the closed space, a volume percentage of hydrogen is measured as y, wherein $y < 5\%$.

3.  The negative electrode material according to claim 1, wherein an average particle size of the silicon-carbon material is 5 $\mu$m to 15 $\mu$m.

4.  The negative electrode material according to claim 1, wherein the silicon-carbon material has a silicate layer on the surface, and a thickness of the silicate layer is z, wherein $50\ nm < z < 1000\ nm$.

5.  The negative electrode material according to claim 1, wherein the mass percentage of the metal element and the mass percentage of element silicon satisfy $0.0001 \leq x/a \leq 0.05$.

6.  The negative electrode material according to claim 1, wherein based on the mass of the silicon-carbon material, a mass percentage of element oxygen is b, wherein $1\% < b < 10\%$.

7.  A method for preparing negative electrode material, wherein the method at least comprises the following steps:

(i) providing a porous carbon skeleton and depositing silicane gas on the porous carbon skeleton to obtain a carbon-silicon material precursor;

(ii) passivating the carbon-silicon material precursor obtained in step (i) by using oxygen to obtain a passivated carbon-silicon material precursor; and

(iii) putting the passivated carbon-silicon material precursor obtained in step (ii) into an alkaline solution to obtain a silicon-carbon material, wherein the alkaline solution is an aqueous solution of hydroxide of a metal element, and the metal element comprises at least one of barium, calcium, magnesium, iron, aluminum, or manganese.

8. An electrochemical apparatus, wherein the electrochemical apparatus comprises a positive electrode, a negative electrode, and an electrolyte, wherein the negative electrode comprises the negative electrode material according to any one of claims 1 to 6; the electrolyte contains lithium hexafluorophosphate; and based on a mass of the electrolyte, a mass percentage of lithium hexafluorophosphate is c, wherein $5\% \leq c \leq 33\%$.

9. The electrochemical apparatus according to claim 8, wherein a mass percentage x of a metal element in the silicon-carbon material and the mass percentage c of lithium hexafluorophosphate in the electrochemical apparatus satisfy $0003 \leq x/c \leq 0.1$.

10. The electrochemical apparatus according to claim 8, wherein the electrochemical apparatus is a lithium-ion battery, and the lithium-ion battery has a cycling retention rate greater than 80% after 800 cycles at a charge rate of 3C at 25°C, and/or has a thickness swelling rate less than 10% after fully charged.

## INTERNATIONAL SEARCH REPORT

| International application No. |
|---|
| **PCT/CN2022/123056** |

| A. | CLASSIFICATION OF SUBJECT MATTER |
|---|---|
| | H01M4/587(2010.01)i;H01M10/0525(2010.01)i |

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 负极, 阳极, 硅, 碳, 炭, 多孔, 骨架, 钝化, 氧化, 硅酸, 碱, 氢氧, 钡, 钙, 镁, 铁, 铝, 锰, 包覆, 包封, 覆盖, 包裹, 壳, 表层, 涂层, anode, negative, carbon, pore, oxid+, silicic acid, alkaline, OH, Ba, Ca, Mg, Fe, Al, Mn, cover, coat, surface, shell

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114420998 A (DONGGUAN AMPEREX TECHNOLOGY LTD.) 29 April 2022 (2022-04-29) description, paragraphs 5-95 | 1-10 |
| Y | CN 109920987 A (NINGDE AMPEREX TECHNOLOGY LTD.) 21 June 2019 (2019-06-21) description, paragraphs 3-43 | 1-10 |
| A | KR 1020210094685 A (DAE JOO ELECTRONIC MATERIALS CO., LTD.) 30 July 2021 (2021-07-30) entire document | 1-10 |
| A | US 4190632 A (DEGUSSA) 26 February 1980 (1980-02-26) entire document | 1-10 |

| ☐ Further documents are listed in the continuation of Box C. | ☑ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 May 2023** | **25 May 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/123056**

| Patent document cited in search report | | | Publication date (day/month/year) | Patent family member(s) | | | Publication date (day/month/year) |
|---|---|---|---|---|---|---|---|
| CN | 114420998 | A | 29 April 2022 | | None | | |
| CN | 109920987 | A | 21 June 2019 | US | 2020266431 | A1 | 20 August 2020 |
| | | | | WO | 2020168780 | A1 | 27 August 2020 |
| KR | 1020210094685 | A | 30 July 2021 | WO | 2021149996 | A1 | 29 July 2021 |
| | | | | EP | 4095947 | A1 | 30 November 2022 |
| | | | | US | 2023049476 | A1 | 16 February 2023 |
| | | | | JP | 2023511165 | W | 16 March 2023 |
| US | 4190632 | A | 26 February 1980 | ES | 456366 | A1 | 16 January 1978 |
| | | | | IT | 1071600 | B | 10 April 1985 |
| | | | | JPS | 52109494 | A | 13 September 1977 |
| | | | | BR | 7701441 | A | 09 May 1978 |
| | | | | DE | 2609831 | A1 | 22 September 1977 |
| | | | | DE | 2609831 | B2 | 23 May 1979 |
| | | | | AR | 210790 | A1 | 15 September 1977 |
| | | | | BE | 852236 | A | 08 September 1977 |
| | | | | GB | 1560503 | A | 06 February 1980 |
| | | | | SE | 7702740 | L | 21 October 1977 |
| | | | | NL | 7700843 | A | 13 September 1977 |
| | | | | NL | 182159 | B | 17 August 1987 |
| | | | | NL | 182159 | C | 18 January 1988 |
| | | | | NO | 770327 | L | 13 September 1977 |
| | | | | NO | 150954 | B | 08 October 1984 |
| | | | | NO | 150954 | C | 16 January 1985 |
| | | | | CH | 630321 | A5 | 15 June 1982 |
| | | | | FR | 2343698 | A1 | 07 October 1977 |
| | | | | FR | 2343698 | B1 | 12 September 1980 |
| | | | | CA | 1082881 | A | 05 August 1980 |
| | | | | ATA | 157677 | A | 15 March 1980 |
| | | | | AT | 359040 | B | 10 October 1980 |

Form PCT/ISA/210 (patent family annex) (July 2022)